# EUROPÄISCHE PATENTANMELDUNG

(11) **EP 2 325 567 A2**
(43) Veröffentlichungstag der Anmeldung: **25.05.2011**
(21) Anmeldenummer: 10191121.2
(22) Anmeldetag: 12.11.2010
(51) Int. Cl.: F24D 3/08, F24D 11/02, F24H 4/04

(54) **Heizsystem**

(30) Priorität: 13.11.2009 DE 102009046707
(71) Anmelder: ROTEX Heating Systems GmbH, 74363 Güglingen (DE)
(72) Erfinder: Grammling, Dr. Franz, 74336, Brackenheim (DE)
(74) Vertreter: Pfiz, Thomas

(57) **Zusammenfassung**

Die Erfindung betrifft ein Heizsystem mit einem Speicherbehälter (10), der mit unter Umgebungsdruck stehendem Wärmespeichermedium (12) befüllt ist, einem in den Speicherbehälter (10) eintauchenden, nach unten offenen Tauchrohr (14), welches eine innere Tauchrohrzone (16) von einer umgebenden Speicherzone (18) trennt, einem in der Speicherzone (18) angeordneten Entnahmewärmetauscher (20) zur Erwärmung von durchlaufendem Brauchwasser unter Wärmeentnahme aus dem Wärmespeichermedium (12),einem in dem Tauchrohr (14) angeordneten Zusatzwärmetauscher (24), der in Wärmeleitkontakt mit dem in der Tauchrohrzone (16) befindlichen Wärmespeichermedium (12) steht und mit einem Heizkreis (34) verbindbar ist und einem Wärmeerzeuger (26) zum Erwärmen des Wärmespeichermediums. Erfindungsgemäß wird vorgeschlagen, dass der Wärmeerzeuger (26) durch eine Wärmepumpe (52) gebildet ist.

## Beschreibung

Die Erfindung betrifft eine Heizsystem mit einem Speicherbehälter, der mit unter Umgebungsdruck stehendem Wärmespeichermedium, insbesondere Wasser befüllt ist, einem in den Speicherbehälter eintauchenden, nach unten offenen Tauchrohr, welches eine innere Tauchrohrzone von einer umgebenden Speicherzone trennt, einem in der Speicherzone angeordneten Entnahmewärmetauscher zur Erwärmung von durchlaufendem Brauchwasser unter Wärmeentnahme aus dem Wärmespeichermedium, einem in dem Tauchrohr angeordneten zusatzwärmetauscher, der in Wärmeleitkontakt mit dem in der Tauchrohrzone befindlichen Wärmespeichermedium steht und mit einem Heizkreis verbindbar ist und einem Wärmeerzeuger zum Erwärmen des Wärmespeichermediums über einen in der Speicherzone angeordneten Ladewärmetauscher und/oder über den Zusatzwärmetauscher.

Ein solches Heizsystem ist aus der EP-A 1707895 bekannt. Dort wird als Wärmeerzeuger ein mit einem Brenner bestückter Heizkessel vorgesehen, um eine möglichst große Wärmeleistung bei kompakter Bauform zu erreichen. Allgemein werden jedoch große Anstrengungen unternommen, die begrenzten fossilen Ressourcen zu schonen und den Kohlendioxidausstoß zu minimieren.

Ausgehend hiervon liegt der Erfindung die Aufgabe zugrunde, die im Stand der Technik bekannten Systeme weiter zu entwickeln und eine möglichst energieeffiziente und zugleich eine variabel nutzbare sowie zuverlässig arbeitende Anordnung anzugeben.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, Umweltwärme für eine kombinierte Brauch- und Heizwasserversorgung mit möglichst geringem apparativem Aufwand zu nutzen. Dementsprechend wird erfindungsgemäß vorgeschlagen, dass der Wärmeerzeuger durch eine Wärmepumpe gebildet ist, wobei die Wärmepumpe eine mit Umweltwärme beaufschlagbare Verdampfereinheit und eine mit dem Ladewärmetauscher und/oder Zusatzwärmetauscher verbindbare Verflüssigereinheit für ein Arbeitsmittel aufweist. Auf diese Weise kann in einem Gesamtheizsystem Wärme von der Umgebung effizient in einen auch mit anderen (regenerativen) Energiequellen oder Hilfsenergiequellen einfach kombinierbaren Speicher gleichsam gepumpt werden. Der Speicher bildet dabei zugleich einen wasserhygienisch optimierten Durchlauferwärmer für Brauchwasser. Gemäß einer besonders bevorzugten Ausgestaltung ist die Verdampfereinheit der Wärmepumpe unter Wärmeentnahme aus dem Wärmespeichermedium in einem Abtaubetrieb abtaubar. Dadurch kann auf den Einsatz einer Elektrozusatzheizung für den Abtaubetrieb verzichtet werden und die mit hoher Effizienz eingespeicherte Wärme aus dem Speicherbehälter kurzfristig genutzt werden, so dass der Heizbetrieb nicht beeinträchtigt wird. Dabei kann eine große Wärmemenge kurzfristig aus dem Speichermedium entnommen werden, wobei Gefahren aufgrund des drucklosen Betriebs des Speicherbehälters vermieden werden.

In einer vorteilhaften Realisierung besitzt die Verflüssigereinheit einen mit dem Zusatzwärmetauscher und/oder mit dem Ladewärmetauscher in einem Kreislauf verbindbaren Primärwärmetauscher, wobei durch eine Ladeströmung in dem Kreislauf Wärme in das Wärmespeichermedium eingebracht und durch eine entgegengesetzte Entladeströmung Wärme zum Abtauen der Verdampfereinheit daraus entnommen wird.

Eine weitere bevorzugte Ausgestaltung sieht vor, dass die Verflüssigereinheit der Wärmepumpe in einem auf den Speicherbehälter aufgesetzten Deckelkasten integriert ist. Auf diese Weise wird eine kompakte Bauform erzielt und die notwendigen Installationen können bereits im Produktionsprozess werkseitig getätigt werden. Dies lässt sich vorteilhaft dadurch verwirklichen, dass die Verflüssigereinheit mit Armaturen und Leitungen und elektrischen Verdrahtungen in dem Deckelkasten fest verbunden wird und durch außenliegende Leitungsanschlüsse an dem Deckelkasten mit der Verdampfereinheit am Aufstellungsort koppelbar ist. Dabei kann der Deckel für den Speicherbehälter zugleich als Bodenteil für den oben aufgesetzten Deckelkasten genutzt werden.

Eine weitere Verbesserung lässt sich dadurch erreichen, dass das Wärmespeichermedium in der durch das wärmegedämmte Tauchrohr begrenzten Tauchrohrzone durch eine elektrische Heizeinheit erwärmbar ist. Damit wird eine einfache Heizungsanpassung entsprechend dem Wärmebedarf in einem nur auf elektrische Hilfsenergie angewiesenen monoenergetischen Betrieb ermöglicht, wobei durch die Einspeisung in das mit der Umgebung kommunizierende drucklose Speichermedium auch im Fehlerfall keine gefährlichen Überdrücke auftreten können.

Um die Tauchrohrzone effektiv aufheizen zu können, ist es vorteilhaft, wenn die elektrische Heizeinheit durch einen das Tauchrohr axial durchgreifenden Elektroheizstab gebildet ist.

Eine weitere vorteilhafte Ausgestaltung sieht eine externe Wärmequelle zur ergänzenden Erwärmung des Wärmespeichermediums in der Tauchrohrzone vor. Dies lässt sich vorteilhaft dadurch realisieren, dass die externe Wärmequelle in einem Hilfskreislauf zur Zirkulation von Wärmespeichermedium angeordnet ist und der Hilfskreislauf in der Tauchrohrzone mündet. Möglich ist es auch, dass die externe Wärmequelle über einen zwischengeschalteten Wärmetauscher, insbesondere einen Plattenwärmetauscher an das Wärmespeichermedium thermisch angekoppelt ist.

Vorteilhafterweise ist die externe Wärmequelle durch einen mit Brennstoff, insbesondere Heizöl, Gas, Holz oder Holzpellets direkt befeuerten Heizkessel oder durch ein Wasserregister in einem Heizkamin gebildet.

In diesem Zusammenhang ist es auch von Vorteil, wenn die Verflüssigereinheit in einem Heizbetrieb über den Zusatzwärmetauscher seriell mit einem externen Heizkreis zur Gebäudeheizung verbindbar ist.

Um eine Vorerwärmung einer vorteilhaft als Solarzone ausgebildeten Bodenzone des Speicherbehälters zu ermöglichen, ist es vorteilhaft, wenn der Zusatzwärmetauscher das Tauchrohr durchgreift und sich in unterhalb des Tauchrohrs in die Bodenzone hinein erstreckt.

Vorteilhafterweise ist unterhalb des Tauchrohrs eine Solarzone zum Einspeisen von solarer Wärme mittels einer Solaranlage freigehalten, wobei im Bereich der Solarzone ein Vorlaufanschluss der Solaranlage angeordnet ist. Dadurch kann die erforderliche Hilfsenergie weiter reduziert werden, ohne dass eine komplexe Anlagenverschaltung erforderlich wäre. Anstelle einer Solaranlage können auch andere Wärmequellen, wie z.B. Öl-, Gas- und Holzkessel vorteilhaft eingesetzt werden.

Um eine schichtweise temperaturgerechte Einspeisung der solaren Wärme zu erreichen, ist es von Vorteil, wenn ein Schichtungsrohr für den Rücklauf einer thermischen Solaranlage sich über die Höhe des Speicherbehälters erstreckt, wobei das Schichtungsrohr über einen unteren Abschnitt verteilte Ausströmöffnungen für das durchlaufende Wärmespeichermedium aufweist.

Im Folgenden wird die Erfindung anhand der in der Zeichnung in schematischer Weise dargestellten Ausführungsbeispiele näher erläutert. Es zeigen:

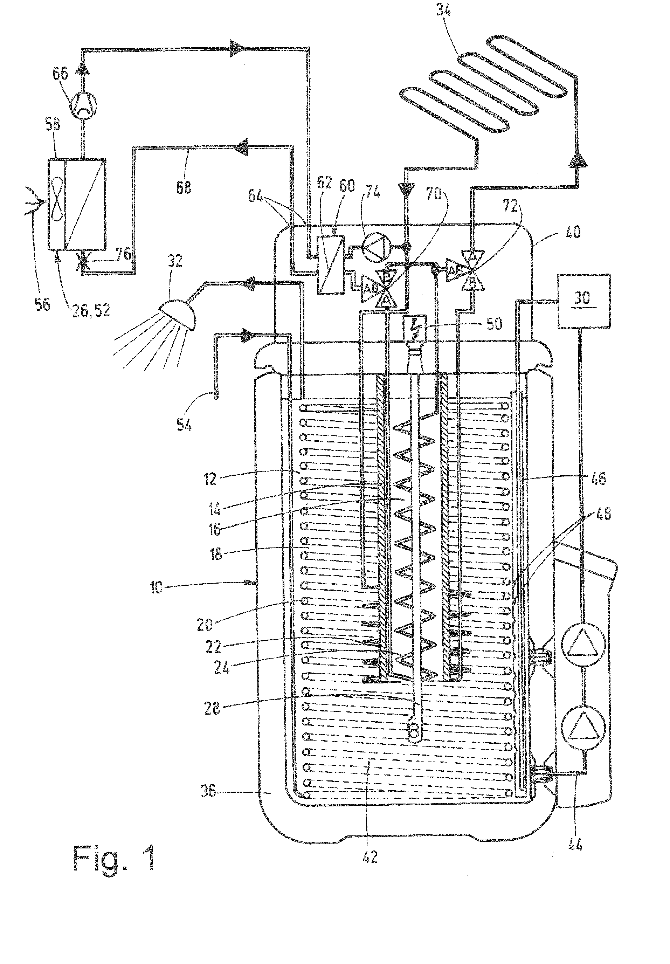

- Fig. 1: eine Heizeinrichtung zur kombinierten Heiz- und Brauchwassererwärmung in einer schaubildlichen Darstellung;
- Fig. 2: eine abgewandelte Ausführungsform der Heizeinrichtung in einer ausschnittsweisen Vergrößerung.

Das in der Zeichnung dargestellte Heizsystem dient zur Erwärmung sowohl von Heizwasser als auch von Brauchwasser in einem Gebäude. Es umfasst einen Speicherbehälter 10 zur Aufnahme von drucklosem Speicherwasser 12 als Wärmespeichermedium, einem darin eintauchenden Tauchrohr 14 zur Begrenzung einer Tauchrohrzone 16 von einer umgebenden Speicherzone 18, mehreren Wärmetauschern 20, 22, 24 zum Wärmeaustausch in dem Speicherwasser 12 und mehreren Wärmeerzeugern 26, 28, 30 zur Aufheizung des Speicherwassers 12. An dem Heizsystem anschließbar sind Verbraucher 32 für Warmwasser (Brauchwasser bzw. Trinkwasser) und ein Heizkreislauf 34 für eine Raumheizung beispielsweise in Form einer Fußbodenheizung.

Der Speicherbehälter 10 umfasst einen stehend aufstellbaren wärmeisolierten Behältertopf 36, der an einer nach oben weisenden Öffnung durch ein Deckelteil 38 schließbar ist. Darauf befindet sich ein Deckelkasten 40, in dem verschiedene Systemkomponenten fest installiert sind, wie es nachstehend näher erläutert wird. Der Speicherbehälter 10 bedarf keiner besonderen Strukturfestigkeit, weil das Speicherwasser 12 allein zur Wärmespeicherung dient und ohne Betriebsüberdruck gegenüber Atmosphäre vorgehalten wird.

Das wärmeisolierte kreiszylindrische Tauchrohr 14 ragt vom Deckelteil 38 her zentral in den Speicherbehälter 10 nach unten hinein, so dass darunter ein Kaltsumpf bzw. eine Solarzone 42 zum Anschluss des Vorlaufs 44 einer Solaranlage 30 freigehalten bleibt. Auf diese Weise ist es möglich, einen Solarkollektor auf niedrigem Temperaturniveau noch mit gutem Wirkungsgrad anzukoppeln. Der Rücklauf der Solaranlage 30 wird durch ein Schichtungsrohr 46 gebildet, welches über einen unteren Abschnitt verteilte Ausströmöffnungen 48 aufweist, um das erwärmte Solarwasser entsprechend der Temperaturschichtung in dem Speicherbehälter 10 höhenvariabel einzuschichten.

Als weiterer Wärmeerzeuger greift ein mittels Modulator 50 ansteuerbarer Elektroheizstab 28 axial durch das vertikale Tauchrohr 14 hindurch und ggf. bis in die Solarzone 42 hinein.

Der außerhalb des Tauchrohrs 14 angeordnete Ladewärmetauscher 22 dient zur Erwärmung des Speicherwassers 12 in der Speicherzone 18 mittels des als Wärmepumpe 52 ausgebildeten Wärmeerzeugers 26, während der innerhalb des Tauchrohrs 14 angeordnete Zusatzwärmetauscher 24 auch die Abnahme der zusätzlich elektrisch eingespeisten Wärmeenergie und ggf. der durch Konvektion aus der Solarzone 42 in das Tauchrohr 14 eingetragenen Solarwärme ermöglicht.

Der in der Nähe der Umfangswand des Speicherbehälters 10 schraubenförmig über dessen Höhe verlaufende Brauchwasserwärmetauscher 20 besteht aus einem Edelstahl-Rohrregister, das von Speicherwasser 18 umgeben ist und vom Brauchwasser über einen Netzanschluß 54 zu dem Verbraucher 32 hin nach Art eines Durchlauferhitzers durchströmbar ist. Dabei weist das Rohrregister ein geeignetes Rohrvolumen von beispielsweise 50 Liter auf, so dass ständig ausreichend Warmwasser gezapft werden kann.

Die Wärmepumpe 52 weist eine mit Umweltwärme aus der Umgebungsluft 56 erwärmbare Außen- bzw. Verdampfereinheit 58 und eine in den Deckelkasten 40 angeordnete Innen- bzw. Verflüssigereinheit 60 auf. Die in dem Deckelkasten 40 integrierte Verflüssigereinheit 60 besitzt einen Plattenwärmetauscher 62, der primärseitig über Leitungsanschlüsse 64 mit einem mittels Pumpe 66 betriebenen Arbeitsmittelkreislauf 68 am Aufstellort verbindbar ist, während die Sekundärseite des Plattenwärmetauschers 62 über fest vorinstallierte Armaturen, insbesondere Wegeventile 70, 72 und Umwälzpumpe 74 in dem Deckelkasten 40 für einen Durchfluss von sekundärseitigem Arbeitsmittel (Heizwasser) vorbereitet ist.

Gemäß den vorstehenden Erläuterungen ergeben sich folgende Betriebsmöglichkeiten des Heizsystems:
Im Arbeitsbetrieb der Wärmepumpe 52 wird in der Verdampfereinheit 58 dem Arbeitsmittel Umweltwärme zugeführt, so dass dieses aufgrund seines niedrigen Siedepunkts vom flüssigen in den gasförmigen Aggregatzustand übergeht. Das mittels elektrisch angetriebener Pumpe 66 unter Temperaturerhöhung verdichtete Arbeitsmittel wird in Pfeilrichtung durch den Kreislauf 68 zu der Verflüssigereinheit 60 transportiert. Dort kann die Wärmeenergie über den Plattenwärmetauscher 62 an dessen Sekundärseite abgegeben werden. Das dabei verflüssigte Arbeitsmittel wird anschließend im Expansionsventil 76 dekomprimiert und dabei abgekühlt, so dass der Kreislauf 68 geschlossen wird und eine Wärmeaufnahme wieder möglich ist.

Der Arbeitsbetrieb der Wärmepumpe 52 kann zur Aufheizung des Speicherwassers 12 genutzt werden. Durch eine nicht gezeigte Steuereinheit wird hierfür das Ventil 70 in die Stellung AB-A und das Ventil 72 in die Stellung AB-B geschaltet. Auf diese Weise wird das Heizwasser sekundärseitig von dem Plattenwärmetauscher 62 über den Zusatzwärmetauscher 24 und den Ladewärmetauscher 22 mittels Pumpe 74 zirkuliert. Dabei wird das Speicherwasser 12 in der Tauchrohrzone 16 und der Speicherzone 18 erwärmt. Zugleich bleibt die Kalt- bzw. Solarzone 42 im unteren Behälterbereich aufrechterhalten, um eine Solarerwärmung auch bei geringer Temperaturdifferenz zu ermöglichen. Die Brauchwassererwärmung erfolgt in der Warm- bzw. Speicherzone 18 über den Brauchwasserwärmetauscher 20 nach dem First-in-first-out-Prinzip, d.h. das aus dem Netz eingespeiste Kaltwasser wird als durchlaufende Flüssigkeitssäule aufgeheizt.

Weiterhin kann der Arbeitsbetrieb der Wärmepumpe 52 zum Heizen unter Zuschaltung des Heizkreislaufs 34 genutzt werden. Hierfür wird beide Ventile 70, 72 in die Stellung AB-A gebracht, so dass das Heizwasser über den Zusatzwärmetauscher 24 in Pfeilrichtung durch den Heizkreislauf 34 und zurück über die Pumpe 74 zirkuliert. Dies ermöglicht es ― je nach momentanem Wirkungsgrad der Wärmepumpe 52 ― durch den Heizstab 28 auf einfache Weise eine monoenergetische (elektrische) Heizungsunterstützung zu realisieren. Daneben ist auch eine solare Unterstützung der Heizleistung durch konvektiv in die Tauchrohrzone 16 aufsteigendes Speicherwasser in einem bivalenten Heizbetrieb möglich. Aufgrund der Wärmedämmung des Tauchrohrs 14 kann beispielsweise die Temperatur der Tauchrohrzone 35°C betragen, während die Temperatur der umgebenden Speicherzone 18 bei 50°C liegt, so dass das solar erwärmte Speicherwasser selektiv in dem Tauchrohr 14 genutzt werden kann, ohne die Brauchwassererwärmung zu beeinträchtigen. Grundsätzlich ist es auch denkbar, die Wärmepumpe 52 in der Stellung AB-B des Ventils 70 und AB-A des Ventils 72 direkt auf den Heizkreislauf 34 aufzuschalten.

Die energieeffizient in das Speicherwasser 12 eingebrachte Wärmeenergie kann auch vorteilhaft für einen Abtaubetrieb der Wärmepumpe 52 genutzt werden. Ein solches Vereisen tritt insbesondere bei Außentemperaturen um 0°C intervallweise an den Kühllamellen der Außeneinheit 58 auf. Zum Abtauen wird in der Stellung AB-A des Ventils 70 und AB-B des Ventils 72 über die Wärmetauscher 24, 22 im Speicherwasser gespeicherte Wärme abgeholt und über den Plattenwärmetauscher 62 entgegen der regulären Durchgangsrichtung primärseitig übertragen. Um dies zu ermöglichen, wird in dem Wärmepumpenkreislauf die Strömungsrichtung durch Umsteuern der Pumpe 66 umgekehrt, so dass ein Durchfluss entgegen der gezeigten regulären Strömungsrichtung erfolgt und die in dem Arbeitsmittel transportierte Wärme unter Prozessumkehr zum kurzfristigen Abtauen der vereisten Verdampfereinheit 58 genutzt werden kann.

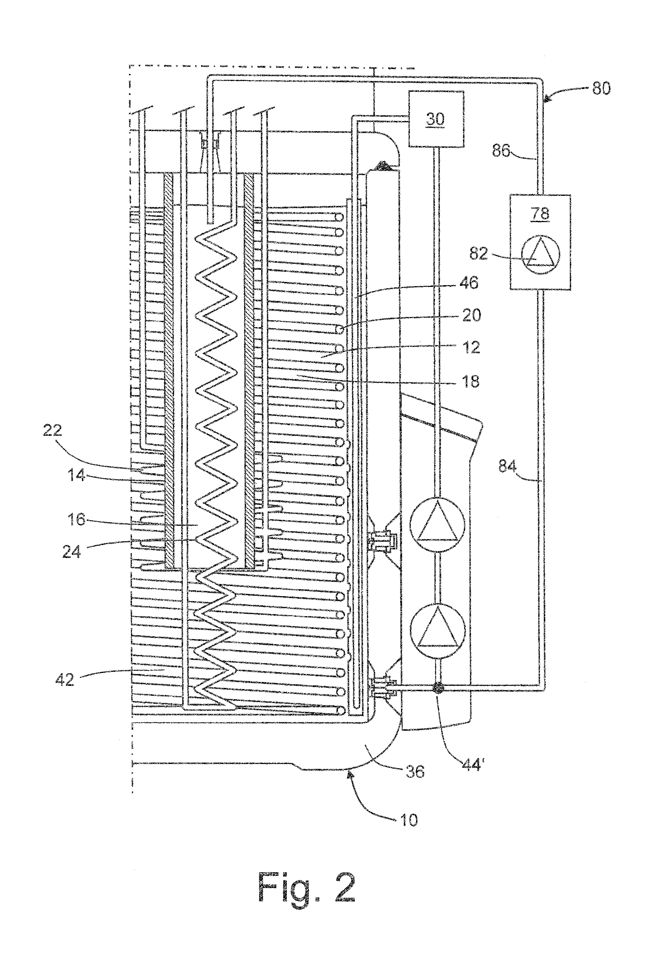

Bei dem in Fig. 2 gezeigten Ausführungsbeispiel sind gleiche Teile mit gleichen, oben bereits erläuterten Bezugszeichen versehen. Zusätzlich ist hier eine externe Wärmequelle 78 zur ergänzenden Erwärmung des in der Tauchrohrzone 16 des Tauchrohrs 14 befindlichen Wärmespeichermediums bzw. Speicherwassers 12 vorgesehen. Dabei ist die Wärmequelle 78 in einem Hilfskreislauf 80 zur Zirkulation des Speicherwassers 12 mittels Zirkulationspumpe 82 angeordnet. Der Hilfskreislauf 80 besitzt eine von einem unteren Anschluss 44' des Speicherbehälters 10 zu der Wärmequelle 78 führende erste Rohrleitung 84 und eine von der Wärmequelle 78 zum oberen Bereich des Tauchrohrs 14 führende zweite Rohrleitung 86. Letztere mündet zentral im oberen Bereich des Tauchrohrs 14, wobei hier auf einen zusätzlichen elektrischen Heizstab verzichtet wird.

Die externe Wärmequelle 78 kann beispielsweise durch einen Heizkessel gebildet sein, der direkt an den Speicherbehälter 10 angeschlossen ist. Die Erwärmung des Speicherwassers kann aber auch mittelbar über einen zwischengeschalteten Plattenwärmetauscher erfolgen (nicht gezeigt).

Zweckmäßig durchgreift der Zusatzwärmetauscher 24 das Tauchrohr 14 vollständig und erstreckt sich unterhalb des Tauchrohrs in die Solarzone 42 des Speicherbehälters 10 hinein.

Dies hat auch den Vorteil, dass ein erheblicher Teil der Speicherwassererwärmung mit hoher Arbeitszahl der Wärmepumpe 52 erfolgen kann und dadurch die Wärmepumpe 52 besonders energieeffizient arbeitet.

## Patentansprüche

1. Heizsystem mit folgenden Merkmalen:
a) einem Speicherbehälter (10), der mit unter Umgebungsdruck stehendem Wärmespeichermedium (12), insbesondere Wasser befüllt ist,
b) einem in den Speicherbehälter (10) eintauchenden, nach unten offenen Tauchrohr (14), welches eine innere Tauchrohrzone (16) von einer umgebenden Speicherzone (18) trennt,
c) einem in der Speicherzone (18) angeordneten Entnahmewärmetauscher (20) zur Erwärmung von durchlaufendem Brauchwasser unter Wärmeentnahme aus dem Wärmespeichermedium (12),
d) einem in dem Tauchrohr (14) angeordneten Zusatzwärmetauscher (24), der in Wärmeleitkontakt mit dem in der Tauchrohrzone (16) befindlichen Wärmespeichermedium (12) steht und mit einem Heizkreis (34) verbindbar ist,
e) einem Wärmeerzeuger (26) zum Erwärmen des Wärmespeichermediums (12) über einen in der Speicherzone (18) angeordneten Ladewärmetauscher (22) und/oder über den Zusatzwärmetauscher (24),
**dadurch gekennzeichnet, dass**
f) der Wärmeerzeuger (26) durch eine Wärmepumpe (52) gebildet ist, wobei die Wärmepumpe (52) eine mit Umweltwärme beaufschlagbare Verdampfereinheit (58) und eine mit dem Ladewärmetauscher (22) und/oder Zusatzwärmetauscher (24) verbindbare Verflüssigereinheit (60) für ein Arbeitsmittel aufweist.

2. Heizsystem nach Anspruch 1, **dadurch gekennzeichnet, dass** die Verdampfereinheit (58) der Wärmepumpe (52) unter Wärmeentnahme aus dem Wärmespeichermedium (12) in einem Abtaubetrieb abtaubar ist.

3. Heizsystem nach Anspruch 1 oder 2, **dadurch gekennzeichnet, dass** die Verflüssigereinheit (60) einen mit dem Zusatzwärmetauscher (24) und/oder mit dem Ladewärmetauscher (22) in einem Kreislauf (68) verbindbaren Primärwärmetauscher (62) aufweist, wobei durch eine Ladeströmung in dem Kreislauf Wärme in das Wärmespeichermedium (12) eingebracht und durch eine entgegengesetzte Entladeströmung Wärme zum Abtauen der Verdampfereinheit (58) daraus entnommen wird.

4. Heizsystem nach einem der Ansprüche 1 bis 3,
**dadurch gekennzeichnet, dass** die Verflüssigereinheit (60) der Wärmepumpe (52) in einem auf den Speicherbehälter (10) aufgesetzten Deckelkasten (40) integriert ist.

5. Heizsystem nach Anspruch 4, **dadurch gekennzeichnet, dass** die Verflüssigereinheit (60) mit Armaturen (70,72,74) in dem Deckelkasten (40) fest verbunden ist und durch außenliegende LeitungsanSchlüsse(64) an dem Deckelkasten (40) mit der Verdampfereinheit (58) koppelbar ist.

6. Heizsystem nach einem der Ansprüche 1 bis 5,
**dadurch gekennzeichnet, dass** das Wärmespeichermedium (12) in der durch das wärmegedämmte Tauchrohr (14) begrenzten Tauchrohrzone (16) durch eine elektrische Heizeinheit (28) erwärmbar ist.

7. Heizsystem nach Anspruch 6, **dadurch gekennzeichnet, dass** die elektrische Heizeinheit (28) durch einen das Tauchrohr (14) axial durchgreifenden Elektroheizstab gebildet ist.

8. Heizsystem nach einem der Ansprüche 1 bis 7, **gekennzeichnet durch** eine externe Wärmequelle (78) zur ergänzenden Erwärmung des Wärmespeichermediums (12) in der Tauchrohrzone (16).

9. Heizsystem nach Anspruch 8, **dadurch gekennzeichnet, dass** die externe Wärmequelle (78) in einem Hilfskreislauf (80) zur Zirkulation von Wärmespeichermedium (12) angeordnet ist und der Hilfskreislauf (80) in der Tauchrohrzone (16) mündet.

10. Heizsystem nach Anspruch 8 oder 9, **dadurch gekennzeichnet, dass** die externe Wärmequelle (78) über einen zwischengeschalteten Wärmetauscher, insbesondere einen Plattenwärmetauscher an das Wärmespeichermedium (12) thermisch ankoppelbar ist.

11. Heizsystem nach einem der Ansprüche 8 bis 10, **dadurch gekennzeichnet, dass** die externe Wärmequelle (78) durch einen mit Brennstoff, insbesondere Heizöl, Gas, Holz oder Holzpellets direkt befeuerten Heizkessel oder durch ein Wasserregister in einem Heizkamin gebildet ist.

12. Heizsystem nach einem der Ansprüche 1 bis 11, **dadurch gekennzeichnet, dass** die Verflüssigereinheit (60) in einem Heizbetrieb über den Zusatzwärmetauscher (24) seriell mit einem externen Heizkreis (34) zur Gebäudeheizung verbindbar ist.

13. Heizsystem nach einem der Ansprüche 1 bis 12, **dadurch gekennzeichnet, dass** der Zusatzwärmetauscher (24) das Tauchrohr (14) durchgreift und sich in unterhalb des Tauchrohrs (14) in eine Bodenzone des Speicherbehälters (10) hinein erstreckt.

14. Heizsystem nach einem der Ansprüche 1 bis 13, **dadurch gekennzeichnet, dass** unterhalb des Tauchrohrs (14) eine Solarzone (42) zum Einspeisen von solarer Wärme mittels einer Solaranlage (30) freigehalten ist, wobei im Bereich der Solarzone (42) ein Vorlaufanschluss (44) der Solaranlage (30) angeordnet ist.

15. Heizsystem nach einem der Ansprüche 1 bis 14, **dadurch gekennzeichnet, dass** ein Schichtungsrohr (46) für den Rücklauf einer thermischen Solaranlage (30) sich über die Höhe des Speicherbehälters (10) erstreckt, wobei das Schichtungsrohr (46) über einen unteren Abschnitt verteilte Ausströmöffnungen (48) aufweist.
